# EUROPÄISCHE PATENTANMELDUNG

(11) **EP 4 470 358 A1**
(43) Veröffentlichungstag der Anmeldung: **04.12.2024**
(21) Anmeldenummer: 24161936.0
(22) Anmeldetag: 07.03.2024
(51) Int. Cl.: A01D 41/14, A01D 61/00

(54) **SELBSTFAHRENDER MÄHDRESCHER MIT EINEM VORSATZGERÄT**

(30) Priorität: 31.05.2023 DE 102023114272
(71) Anmelder: CLAAS Selbstfahrende Erntemaschinen GmbH, 33428 Harsewinkel (DE)
(72) Erfinder: Benes, Jason, Nebraska, 68462 (US); Lahmann, Dirk, 33790 Halle/Westf. (DE); Wilkening, Kevin, La Vista, NE 68128 (US); Aschbrenner, Brian, Omaha, NE 68136 (US); Brown, Colin, Bennington, 68007 (US)
(74) Vertreter: CLAAS Gruppe

(57) **Zusammenfassung**

Die Erfindung betrifft einen selbstfahrender Mähdrescher (1) mit einem Vorsatzgerät (3), das mindestens einen Querförderer (30) aufweist, der an seinen Stirnseiten (34) von je einer höhenverstellbaren Halterung (35, 63, 64) aufgenommen ist, wobei zumindest eine erste Halterung (35) an einer Seitenwand (37) des Vorsatzgeräts (3) angeordnet ist, wobei die erste Halterung (35) ein Flanschsegment (38) umfasst, dass mittels einer Mehrzahl von Verbindungsmitteln (39) an der Seitenwand (37) angeordnet ist.

## Beschreibung

Die Erfindung betrifft einen selbstfahrenden Mähdrescher mit einem Vorsatzgerät gemäß dem Oberbegriff des Anspruchs 1.

Das Vorsatzgerät umfasst einen Tragrahmen, einen an dem Tragrahmen angeordneten Mähbalken sowie einen drehantreibbar an dem Tragrahmen gelagerten Querförderer. Der Mähbalken dient dazu, zu erntende Pflanzen, beispielsweise Gerste, Raps oder Weizen, abzuschneiden, sodass diese mittels des Mähdreschers weiterverarbeitet werden können. Die Breite eines Vorsatzgeräts übersteigt in aller Regel die Breite der übrigen zugehörigen Erntemaschine deutlich, sodass über die gesamte Breite des Schneidwerks hinweg geschnittene Pflanzen zunächst in dem Vorsatzgerät zusammengeführt werden müssen, bevor sie mittels des Mähdreschers weiterverarbeitet werden können. Insbesondere ist es üblich, die geschnittenen Pflanzen in einem Mittelbereich des Vorsatzgeräts zusammenzuführen, um diese sodann ausgehend von dem Mittelbereich an einen dem Vorsatzgerät nachgeordneten Schrägförderer des Mähdreschers zu übergeben. Zur Förderung der geschnittenen Pflanzen in die Breitenrichtung des Schneidwerks dient der genannte Querförderer. Dieser erstreckt sich in aller Regel zumindest im Wesentlichen über eine gesamte Breite des Vorsatzgeräts und ist dazu geeignet, die geschnittenen Pflanzen zu fördern. Je nach Ausgestaltung des Schneidwerks kann der Querförderer beispielsweise zumindest teilweise in Form einer Einzugsschnecke ausgebildet sein, die die gewünschte Förderwirkung gemäß dem Prinzip einer Förderschnecke erzielt. Dabei versteht es sich, dass Windungen einer solchen Einzugsschnecke in den einander gegenüberliegenden Seitenbereichen des Schneidwerks, die sich beidseits des Mittelbereichs erstrecken, entgegengesetzt um einen Kern der Einzugsschnecke gewunden sind, sodass jeweils eine Förderwirkung in Richtung des Mittelbereichs bewirkt wird.

Ein selbstfahrender Mähdrescher mit einem derartigen Vorsatzgerät ist aus der DE 10 2018 108 405 A1 bekannt. Die DE 10 2018 108 405 A1 betrifft ein Fahrerassistenzsystem, dass automatisch die Arbeitshöhe des Querförderers in Abhängigkeit der Ernteparameter einstellt. Hierdurch lässt sich die Arbeitshöhe automatisch an eine zu Erntende Fruchtart, eine Fruchtgröße oder einen Feuchtigkeitsgehalt einstellen, um eine optimale Förderwirkung des Querförderers zu erreichen und Beschädigungen der Früchte zu vermeiden. Hierfür schlägt die DE 10 2018 108 405 A1 vor, den Querförderer mittels Hydraulikzylindereinheiten an dem Vorsatzgerät anzuordnen.

Nachteilig an der aus dem Stand der Technik bekannten Lösung ist, dass nicht jeder Mähdrescher über ein Fahrerassistenzsystem zur Einstellung der Arbeitshöhe des Querförderers verfügt. Weiterhin ist ein komplexes Hydrauliksystem mit entsprechenden Steuereinheiten erforderlich.

Es ist deshalb Aufgabe der Erfindung, die beschriebenen Nachteile des Standes der Technik zu vermeiden und insbesondere eine Anordnung des Querförderers an dem Vorsatzgerät zu schaffen, die einen einfachen Aufbau aufweist und auf einfache Art und Weise eine manuelle Einstellbarkeit der Arbeitshöhe des Querförderers ermöglicht.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein selbstfahrender Mähdrescher mit einem Vorsatzgerät vorgeschlagen, das mindestens einen Querförderer aufweist, der an seinen Stirnseiten von je einer höhenverstellbaren Halterung aufgenommen ist, wobei zumindest eine erste Halterung an einer Seitenwand des Vorsatzgeräts angeordnet ist, wobei die erste Halterung ein Flanschsegment umfasst, dass mittels einer Mehrzahl von Verbindungsmitteln an der Seitenwand angeordnet ist. Mittels des Flanschsegments ist die Lage des Querförderers relativ zu der Seitenwand besonders einfach mittels einer Relativbewegung des Flanschsegments bezogen auf die Seitenwand veränderbar. Zur Veränderung der Position des Flanschsegments ist das Flanschsegment mit den Verbindungsmitteln lösbar an der Seitenwand angeordnet. Im gelösten Zustand können die Verbindungsmittel weiterhin derart mit dem Flanschsegment und der Seitenwand zusammenwirken, sodass diese beim Verändern der Position eine Bewegungsrichtung vorgeben.

Im Unterscheid zum Stand der Technik sind keine komplexen Hydraulikkomponenten zur Höheneinstellung des Querförderers erforderlich und die Höheneinstellung kann auch in weniger komplexen Vorsatzgeräten in Verbindung mit fahrerassistenzlosen Mähdreschern verwendet werden. Weiterhin hat die vorschlagsgemäße Lösung einen geringen Bauraumbedarf, ist kostengünstig und stellt zugleich eine Nachrüstlösung für Vorsatzgeräte ohne höhenverstellbaren Querförderer dar. Die Verbindungsmittel können vorzugsweise auf der dem Querförderer zugewandten Seite der Seitenwand angeordnet sein, sodass diese für einen Bediener besonders komfortabel zugänglich sind. Dennoch entsteht aufgrund des flachen Aufbaus des Flanschsegments keine negative Einschränkung des Gutflusses.

Eine vorteilhafte Weiterbildung sieht vor, dass das Flanschsegment einen an der Seitenwand anliegenden flächigen Abschnitt umfasst, der eine Mehrzahl von Verbindungsbereichen, insbesondere Langlöcher, umfasst, wobei den Verbindungsbereichen die Verbindungsmittel zugeordnet sind, wobei bei Vorliegen der Verbindungsmittel in einem Losezustand die erste Halterung entlang einer sich im Wesentlichen in vertikaler Richtung erstreckenden Achse relativ zu der Seitenwand beweglich ist. Hierdurch ist die Ausrichtung des Flanschsegments zusammen mit dem an dem Flanschsegment angeordneten Querförderer besonders einfach möglich. Durch die Verbindungsbereiche kann die Bewegungsrichtung entlang der im Wesentlichen vertikalen Achse definiert werden, wobei die Verbindungsmittel bei einer Bewegung entlang der im Wesentlichen vertikalen Achse in den Verbindungsbereichen geführt sind, sodass sich eine Beweglichkeit des Flanschsegments entlang der vertikalen Achse einstellt.

Um einen Bediener die Einstellung der Höhe des Querförderers zu erleichtern kann das Flanschsegment eine Skala zur Anzeige einer Position des Querförderers umfassen, wobei vorzugsweise die Skala eine Markierung für eine Neutralstellung, eine Hochstellung und einer Tiefstellung des Querförderers aufweist.

Eine weitere vorteilhafte Weiterbildung sieht vor, dass an den flächigen Abschnitt ein abgekanteter Abschnitt angeordnet ist und an der Seitenwand eine Konsole angeordnet ist, wobei der abgekantete Abschnitt und die Konsole mit einem Stellelement, insbesondere einem Bolzen, verbunden sind, wobei das Stellelement sich entlang der im Wesentlichen in vertikale Richtung erstreckenden Achse erstreckt und zum Verfahren des Flanschsegments in die im Wesentlichen vertikale Richtung vorgesehen und eingerichtet ist. Das Stellelement verhindert, dass das Flanschsegments in einem Losezustand der Verbindungsmittel schwerkraftbedingt seine Position verändert. Zugleich bildet das Stellelement im Losezustand der Verbindungsmittel ein Mittel zur Einstellung der Höhe des Querförderers.

Vorzugsweise kann die erste Halterung zur Lagerung des Querförderers einen in den Querförderer stirnseitig hineinragenden Lagertopf umfassen, der koaxial zu einer Rotationsachse des Querförderers angeordnet ist und einen an dem Querförderer ortsfest angeordneten ersten Zapfen abschnittsweise umschließt, wobei der erste Zapfen mittels eines Lagers drehbar an dem Lagertopf angeordnet ist.

Vorzugsweise kann auf dem ersten Zapfen eine Überlastkupplung mit einer Riemenscheibe angeordnet sein, wobei die Überlastkupplung zur Übertragung einer Antriebskraft von der Riemenscheibe auf den ersten Zapfen vorgesehen und eingerichtet ist. Die Überlastkupplung verhindert das Auftreten von Beschädigung des Querförderers, wenn sich unerwünschte Gegenstände, wie beispielsweise Steine, zwischen dem Querförderer und dem Schneidtisch verkeilen.

Um zu verhindern, dass ein Antriebsriemen zur Übertragung eines Drehmoments von einer Riemenscheibe rutscht, kann an der ersten Halterung ein Riemenführungselement, vorzugsweise ein Riemenführungsbolzen, angeordnet sein, der mit einem Riemen in Wirkverbindung steht. Das Riemenführungselement ist an dem Flanschsegment angeordnet, sodass dieses zusammen mit dem Querförderer entlang der im Wesentlichen vertikalen Achse verschiebbeweglich ist.

Eine vorteilhafte Ausgestaltung sieht vor, dass das Vorsatzgerät einen Mittenabschnitt und zumindest einen Seitenabschnitte umfasst, die jeweils um eine in Fahrtrichtung orientierte Schwenkachse schwenkbeweglich verbunden sind, wobei der Querförderer mehrteilig ausgebildet ist und ein erster Teil des Querförderers mit dem Seitenabschnitt gegenüber einem in dem Mittenabschnitt angeordneten zweiten Teil des Querförderers verschwenkbeweglich ist, wobei die einander zugewandten Enden des ersten und zweiten Teils des Querförderers separat mittels einer höhenverstellbaren zweiten und dritten Halterung an dem Vorsatzgerät angeordnet sind. Mithin kann die Höhe des jeweiligen Teils des Querförderers separat für den jeweiligen Abschnitt des Vorsatzgeräts eingestellt werden.

Zur Übertragung eines Antriebsmoments können der erste und zweite Teil des Querförderers in einem ausgeklappten Zustand des Seitenabschnitts stirnseitig mit einer Kupplung in kraftübertragender Weise miteinander verbunden sein.

Vorzugsweise kann die zweite Halterung zur Lagerung des ersten Teils des Querförderers einen in den ersten Teil des Querförderers stirnseitig hineinragenden Lagertopf umfassen, der koaxial zu dem ersten Teil des Querförderer angeordnet ist und einen an dem ersten Teil des Querförderers ortsfest angeordneten zweiten Zapfen abschnittsweise umschließt, wobei der zweite Zapfen mittels eines Lagers drehbar an dem Lagertopf der zweiten Halterung angeordnet ist.

Gemäß einer vorteilhaften Weiterbildung kann die zweite Halterung eine Tragplatte umfassen, die höhenverstellbar an einem Querrahmen des Seitenabschnitts angeordnet ist, wobei vorzugsweise an dem Querrahmen des Seitenabschnitts eine Konsole angeordnet ist, die eine Mehrzahl von Verbindungsbereichen, insbesondere Langlöcher, umfasst, wobei den Verbindungsbereichen jeweils Verbindungsmittel zugeordnet sind, wobei die Tragplatte mit den Verbindungsmitteln höhenverstellbar an der Konsole angeordnet ist. Hierdurch wird eine besonders vorteilhafte höhenverstellbare zweite Halterung geschaffen.

Vorzugsweise kann die dritte Halterung zur Lagerung des zweiten Teils des Querförderers einen in den zweiten Teil des Querförderers stirnseitig hineinragenden Lagertopf umfassen, der koaxial zu dem zweiten Teil des Querförderer angeordnet ist und einen an dem zweiten Teil des Querförderer ortsfest angeordneten dritten Zapfen abschnittsweise umschließt, wobei der dritte Zapfen mittels eines Lagers drehbar an dem Lagertopf angeordnet ist.

Gemäß einer vorteilhaften Weiterbildung kann die dritte Halterung eine Tragplatte umfassen, die höhenverstellbar an einem Rahmen des Mittenabschnitts angeordnet ist, wobei vorzugsweise an dem Rahmen des Mittenabschnitts eine Konsole angeordnet ist, die eine Mehrzahl von Verbindungsbereichen, insbesondere Langlöcher, umfasst, wobei den Verbindungsbereichen jeweils Verbindungsmittel zugeordnet sind, wobei die Tragplatte mit den Verbindungsmitteln höhenverstellbar an der Konsole angeordnet ist. Hierdurch wird eine besonders vorteilhafte höhenverstellbare dritte Halterung geschaffen.

Die vorliegende Erfindung wird nachstehend anhand eines in den Zeichnungen dargestellten Ausführungsbeispiels näher erläutert.
- Figur 1: eine schematische Darstellung eines selbstfahrenden Mähdreschers in Seitenansicht;
- Figur 2: eine perspektivische Ansicht eines Vorsatzgeräts;
- Figur 3: eine perspektivische Ansicht einer Halterung zur Halterung eines Querförderers;
- Figur 4: eine Draufsicht einer Halterung zur Halterung eines Querförderers;
- Figur 5: eine Schnittansicht eines Querförderers des Vorsatzgeräts;
- Figur 6: eine Schnittansicht einer Halterung zur Halterung des Querförderers.

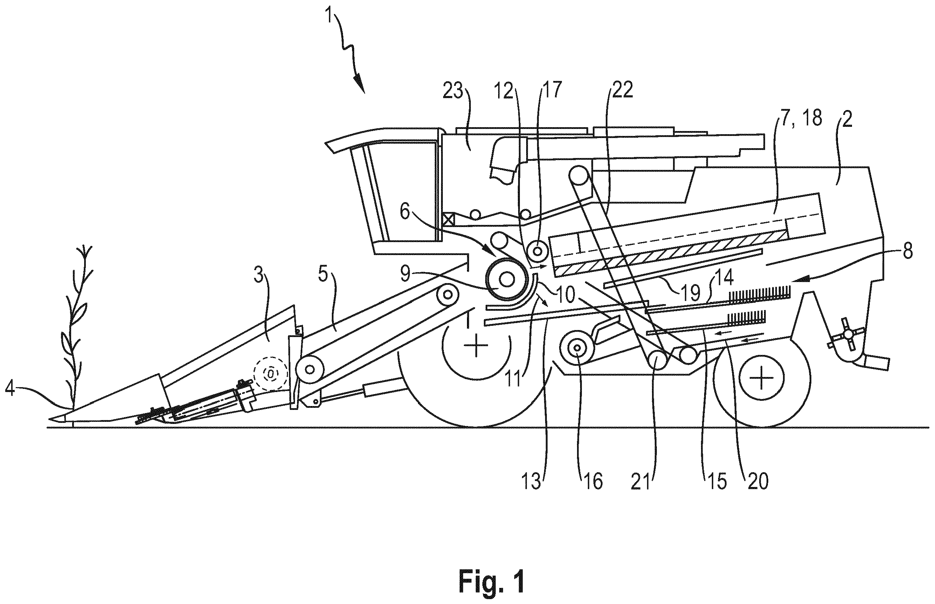

Fig. 1 zeigt eine schematische Darstellung eines selbstfahrenden Mähdreschers 1 in Seitenansicht. Der Mähdrescher 1 weist ein mit einem Fahrwerk verbundenes Traggestell auf, auf dem ein mehrteiliges Maschinengehäuse 2 befestigt ist. Der Mähdrescher 1 nimmt mit einem Vorsatzgerät 3 in an sich bekannter Weise Erntegut 4 von einem Feld auf.

Das aufgenommene Erntegut 4 wird über einen Schrägförderer 5 einer Dresch- und Trenneinrichtung übergeben. Die Dresch- und Trenneinrichtung umfasst eine nach dem Tangentialflussprinzip arbeitende Dreschvorrichtung 6, eine der Dreschvorrichtung 6 nachgeordnete Abscheideeinrichtung 7 und eine Siebanordnung 8 als Teil einer Reinigungsvorrichtung des Mähdreschers 1.

In der Dreschvorrichtung 6 wird das Erntegut 4 zwischen zumindest einer Dreschtrommel 9 und einem diese wenigstens teilweise ummantelnden Dreschkorb 10 hindurchgeführt und in zumindest zwei Teilströme 11, 12 getrennt. Der erste Teilstrom 11 besteht im Wesentlichen aus Körnern, Kurzstroh und Spreu und wird über einen Vorbereitungsboden 13 der aus einem Obersieb 14 und einem Untersieb 15 bestehenden Siebanordnung 8 zugeführt. Ein Reinigungsgebläse 16 generiert einen Luftstrom, welcher die Siebe 14, 15 durchsetzt.

Der im rückwärtigen Bereich der Dreschvorrichtung 6 aus diesem austretende weitere, im Wesentlichen aus Halmgut, insbesondere Stroh und einem Restkornanteil, bestehende zweite Teilstrom 12 wird mittels einer Zuführtrommel 17 zu der als Axialrotor ausgeführten Abscheideeinrichtung 7 geleitet. In einer alternativen Ausführungsform kann die Abscheideeinrichtung 7 auch als Hordenschüttleranordnung ausgeführt sein. Ein im Wesentlichen aus einem Gemisch aus Körnern und Ährenbruchstücken sowie Kurzstroh bestehender Erntegutstrom wird von der Abscheideeinrichtung 7 abgeschieden und über einen sogenannten Rücklaufboden 19 und den Vorbereitungsboden 13 an die Siebanordnung 8 übergeben.

In der Siebanordnung 8 wird schließlich in an sich bekannter Weise ein gereinigter Körnerstrom 18 abgeschieden und über einen Auffang- und Führungsboden 20 einer Kornförderschnecke 21 zugeführt, von wo aus er mittels eines Elevators 22 in den Korntank 23 gefördert wird.

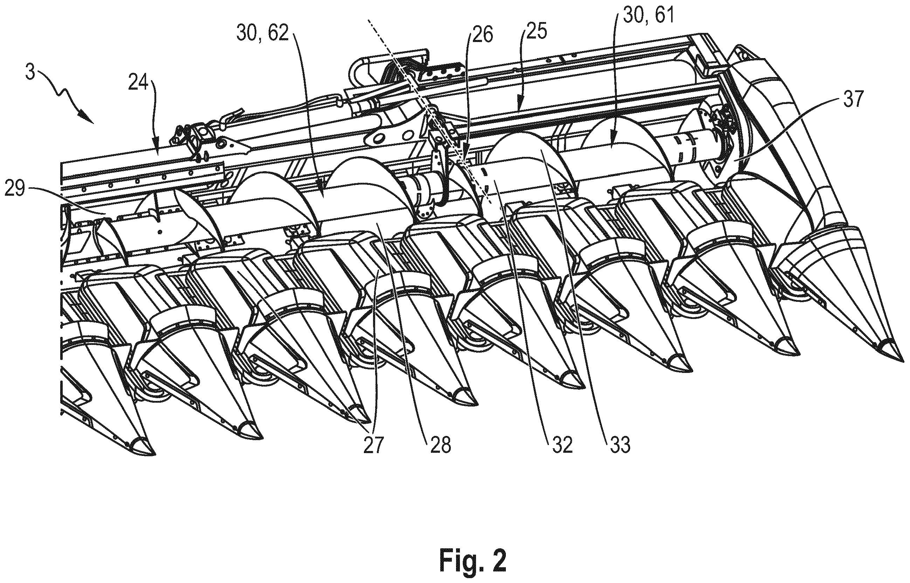

Fig. 2 zeigt einen Ausschnitt des Vorsatzgeräts 3 in einer perspektivischen Ansicht. Das Vorsatzgerät 3 umfasst einen Mittenabschnitt 24, der im bestimmungsgemäßen Betriebszustand mit dem Schrägförderer 5 des Mähdreschers 1 verbunden ist und einen an der Stirnseite des Mittenabschnitts 24 angeordneten Seitenabschnitt 25. In Fig. 2 ist lediglich ein Seitenabschnitt 25 dargestellt, ein weiterer identisch ausgebildeter Seitenabschnitt 25 ist an der hier nicht dargestellten dem Seitenabschnitt 25 gegenüberliegenden Stirnseite des Mittenabschnitts 24 angeordnet. Der Seitenabschnitt 25 ist um eine in Fahrtrichtung orientierte Schwenkachse 26 schwenkbeweglich an den Mittenabschnitt 24 angeordnet, sodass dieser von der in Fig. 2 dargestellten Betriebsstellung hin zu einer eingeschwenkten Transportstellung verschwenkbeweglich ist.

Das hier dargestellte Vorsatzgerät 3 ist als Maispflücker ausgebildet. Hierfür umfasst das Vorsatzgerät 3 vorderseitig eine Mehrzahl von an sich bekannten und hier nicht näher zu erläuternden Pflückeinheiten 27, die zur Aufnahme des Ernteguts 4 von einem Feldbestand vorgesehen und eingerichtet sind. In einer alternativen Ausgestaltung kann anstatt der Pflückeinheiten 27 auch ein Messerbalken vorderseitig an dem Vorsatzgerät 3 angeordnet sein. Das aufgenommene Erntegut 4 wird einen hinter den Pflückeinheiten 27 befindlichen Schneidtisch 28 zugeführt.

Um das aufgenommene Erntegut 4 aktiv hin zu einer Auslassöffnung 29 zu fördern, umfasst das Vorsatzgerät 3 einen Querförderer 30. Bei diesem handelt es sich um ein lang gestrecktes Bauteil, das sich quer zur Vorwärtsfahrtrichtung des Mähdreschers 1 erstreckt. Der Querförderer 30 ist als Einzugswalze ausgebildet und dazu vorgesehen und eingerichtet das Aufgenommene Erntegut in einen Mittelbereich des Mähdreschers 1 zusammenzuführen. Der Querförderer 30 ist um eine Rotationsachse 31 drehanatreibbar angeordnet. Der Querförderer 30 verfügt über einen Walzenkern 32 sowie außenseitig auf dem Walzenkern 32 angeordneten Schneckenwindungen 33, die sich radial bezogen auf die Rotationsachse 31 über eine äußere Mantelfläche des Walzenkerns 32 hinaus erstrecken.

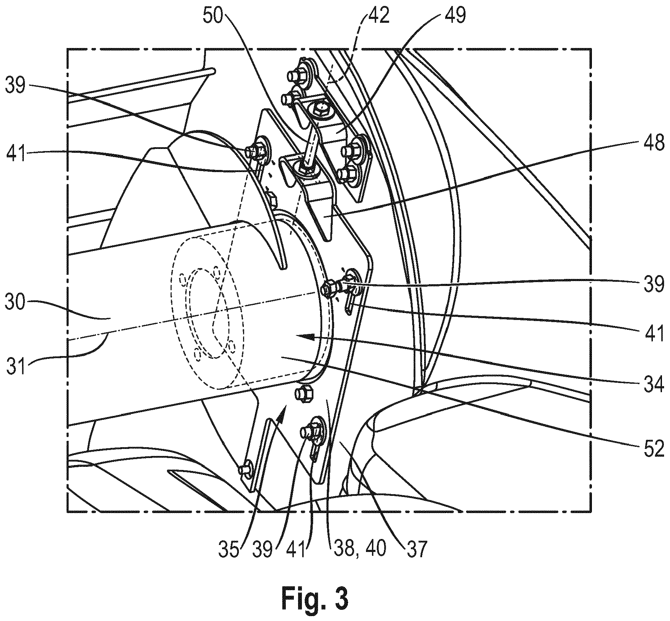

Der Querförderer 30 ist an seinen Stirnseiten 34 jeweils von einer höhenverstellbaren Halterung 35, 63 aufgenommen. Wie Fig. 3 zeigt, ist eine höhenverstellbare erste Halterung 35 an einer Seitenwand 37 des Vorsatzgeräts 3 angeordnet. Die Seitenwand 37 begrenzt den Schneidtisch 28 des Vorsatzgeräts 3 in seiner Längserstreckung. Die erste Halterung 35 umfasst ein Flanschsegment 38, dass mittels einer Mehrzahl von Verbindungsmitteln 39, insbesondere Bolzen oder Schrauben, an der Seitenwand 37 verschraubt ist. Das Flanschsegment 38 umfasst einen flächigen Abschnitt 40, der an der Seitenwand 37 anliegt. Der flächige Abschnitt 40 umfasst eine Mehrzahl von als Langlöcher ausgeführten Verbindungsbereichen 41, wobei sich die Verbindungsmittel 39 durch die Verbindungsbereiche 41 erstrecken. Bei Vorliegen der Verbindungsmittel 39 in einem Losezustand, in welchem die Verbindungsmittel 39 nicht fest verschraubt sind, ist das Flanschsegment 38 zusammen mit der ersten Halterung 35 und dem Querförderer 30 entlang einer sich in vertikaler Richtung erstreckenden Achse 42 relativ zur Seitenwand 37 beweglich, sodass ein Abstand des Querförderers 30 gegenüber dem Schneidtisch 28 einstellbar ist. Mit anderen Worten ist das Flanschsegment 38 in vertikaler Richtung verschiebbeweglich, wobei die Verschiebbarkeit mittels der durch Verbindungsbereiche 41 geführten Verbindungsmittel 39 begrenzt ist.

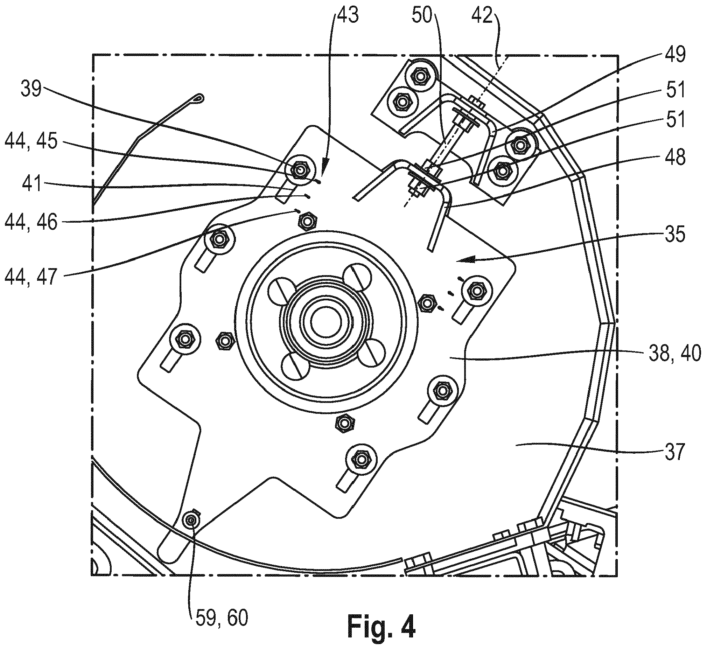

Die erste Halterung 35 ist in Fig. 4 in einer schematischen Draufsicht dargestellt. Das Flanschsegment 38 umfasst eine Skala 43 zur Anzeige einer Position des Flanschsegments 38 relativ zu der Seitenwand 37. Die Skala 43 umfasst eine Mehrzahl von Markierungen 44 die seitlich neben zumindest einem Verbindungsbereich 41 angeordnet sind. Die Markierungen 44 kennzeichnen eine Position des Flanschsegments 38 gegenüber einem Verbindungsmittel 39. Mithin sind die Markierungen ein Indiz für die eingestellte Höhe des Querförderers 30 bzw. dem Abstand des Querförderers 30 gegenüber dem Schneidtisch 28. Hier und vorzugsweise umfasst die Skala 43 drei Markierungen 44, die eine Hochstellung 45, eine Neutralstellung 46 und eine Tiefstellung 47 des Flanschsegments 38 und somit des Querförderers kennzeichnen. Die Neutralstellung 46 befindet sich mittig zwischen der Tiefstellung 47 und der Hochstellung 45.

Wie in Fig. 4 näher dargestellt ist, ist an dem Flanschsegment 38 ein abgekanteter Abschnitt 48 angeordnet. Der abgekantete Abschnitt 48 bildet einen von dem flächigen Abschnitt 40 hervorstehenden Vorsprung aus. Weiterhin ist an der Seitenwand 37 eine Konsole 49 angeordnet, die ebenfalls von der Seitenwand 37 hervorsteht. Der abgekantete Abschnitt 48 und die Konsole 49 sind mittels eines Stellelements 50 verbunden. Das Stellelement 50 erstreckt sich entlang der in die vertikale Richtung erstreckenden Achse 42. Das Stellelement 50 ist als Schraubbolzen ausgebildet und mittels zweier Muttern 51 an dem abgekanteten Abschnitt 48 gehaltert, sodass die Position der Muttern 51 und somit auch die Position des abgekanteten Abschnitts 48 in axialer Richtung des Stellelements 50 relativ zu der Konsole 49 einstellbar ist. Mithin ist mittels des Stellelements 50 die Position des Flanschsegments 38 entlang der vertikalen Achse 42 einstellbar.

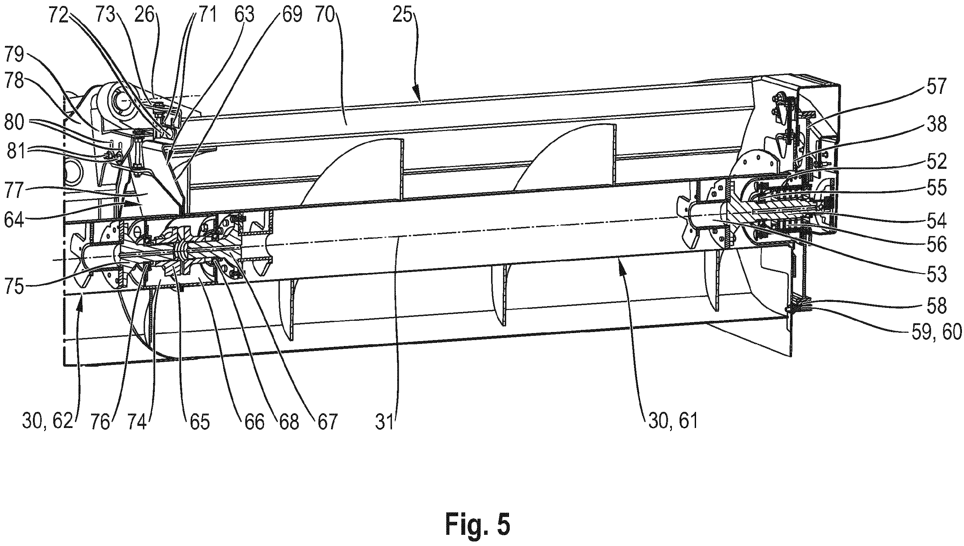

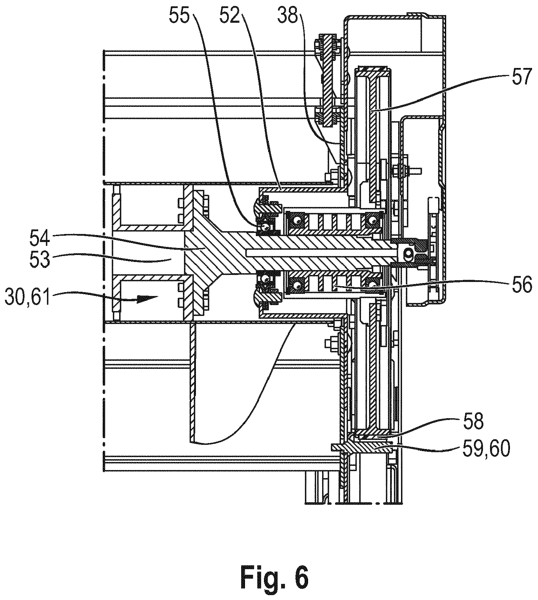

Die Schnittansichten gemäß der Figuren 5 und 6 zeigen, dass die erste Halterung 35 einen in den Querförderer 30 stirnseitig hineinragenden Lagertopf 52 umfasst. Der Lagertopf 52 ist koaxial zu der Rotationsachse 31 des Querförderers 30 angeordnet. Der Lagertopf 52 ist an dem Flanschsegment 38 ortsfest angeordnet, und erstreckt sich in Richtung des Querförderers 30. Der Lagertopf 52 ist abschnittsweise radial außenseitig von dem Querförderer 30 umhüllt. Weiterhin weist der Querförderer 30 endseitig im inneren einen Stirnflansch 53 auf, von dem aus sich ein erster Zapfen 54 in axialer Richtung des Querförderers 30 aus dem Inneren hinaus aus dem Querförderer 30 erstreckt. Der erste Zapfen 54 ist abschnittsweise von dem Lagertopf 52 umhüllt, wobei der erste Zapfen 54 mittels eines Lagers 55 drehbar an dem Lagertopf 52 gelagert ist.

Hier und vorzugsweise ist an dem ersten Zapfen 54 eine Überlastkupplung 56 mit einer Riemenscheibe 57 angeordnet. Die Riemenscheibe 57 steht mit einem Antriebsriemen 58 in Wirkverbindung, sodass ein Antriebsmoment mittels der Riemenscheibe 57 auf den Querförderer 30 übertragbar ist. Um zu verhindern, dass der Antriebsriemen 58 im Betriebszustand des Querförderers 30 von der Riemenscheibe 57 rutscht, ist an der ersten Halterung 35 ein als Riemenführungsbolzen 59 ausgeführtes Riemenführungselement 60 angeordnet. Wie die Schnittansicht gemäß Fig. 6 zeigt, wird der Antriebsriemen 58 zwischen dem Riemenführungselement 60 und der Riemenscheibe 57 entlanggeführt und in seiner Position gehalten. Wie Fig. 4 zeigt, ist das Riemenführungselement 60 ortsfest an dem Flanschsegment 38 angeordnet, vorzugsweise verschraubt, sodass das Riemenführungselement 60 zusammen mit der ersten Halterung 35 entlang der vertikalen Achse 42 verschiebbeweglich ist.

Der Querförderer 30 kann einteilig ausgebildet sein. Bei einem einteilig ausgebildeten Querförderer 30 ist dieser lediglich mittels zweier identischer ausgeführter erster Halterungen 35 an den Stirnseiten 34 des Vorsatzgeräts 3 angeordnet. Hier und vorzugsweise ist der Querförderer 30 jedoch aufgrund der verschwenkbar miteinander verbundenen Mitten- und Seitenabschnitte 24, 25 des Vorsatzgeräts 3 mehrteilig ausgeführt. Ein erster Teil 61 des Querförderers 30 erstreckt sich entlang des in Fig. 5 dargestellten Seitenabschnitts 25 und ist zusammen mit dem Seitenabschnitt 25 gegenüber dem Mittenabschnitt 24 verschwenkbeweglich um die Schwenkachse 26 angeordnet. Ein zweiter Teil 62 des Querförderers 30 erstreckt sich entlang des Mittenabschnitts 24. Die einander zugewandten Enden des ersten Teils 61 und des zweiten Teils 62 sind separat mittels einer höhenverstellbaren zweiten Halterung 63 und einer höhenverstellbaren dritten Halterung 64 an dem Vorsatzgerät 3 angeordnet. Zur Übertragung eines Antriebsmoments von dem ersten Teil 61 des Querförderers 30 auf den zweiten Teil 62 des Querförderers 30 sind diese in dem in Fig. 5 dargestellten ausgeklappten Zustand des Seitenabschnitts 25 mit einer Kupplung 65 in kraftübertragender Weise miteinander verbunden. Die Kupplung 65 kann beispielsweise eine Klauenkupplung sein.

Analog zu der ersten Halterung 35 umfasst die zweite Halterung 63 einen in den ersten Teil 61 des Querförderers 30 stirnseitig hineinragenden Lagertopf 66, der koaxial zu dem ersten Teil 61 des Querförderers 30 angeordnet ist. Der Lagertopf 66 umschließt einen ortsfest an dem ersten Teil 61 des Querförderers 30 angeordneten zweiten Zapfen 67, wobei der zweite Zapfen 67 mittels eines Lagers 68 drehbar an dem Lagertopf 66 der zweiten Halterung 63 angeordnet ist. Weiterhin umfasst die zweite Halterung 63 eine Tragplatte 69. Die Tragplatte 69 erstreckt sich ausgehend von dem Lagertopf 66 in Hochrichtung des Vorsatzgeräts 3 und ist höhenverstellbar an einem Querrahmen 70 des Seitenabschnitts 25 angeordnet. Hierfür ist an dem Querrahmen 70 des Seitenabschnitts 25 eine Konsole 73 angeordnet, die eine Mehrzahl von Verbindungsbereichen 71, insbesondere Langlöcher, umfasst, wobei den Verbindungsbereichen 71 jeweils Verbindungsmittel 72 zugeordnet sind, wobei die Tragplatte 69 mit den Verbindungsmitteln 72 höhenverstellbar an der Konsole 73 angeordnet ist.

Hier und vorzugsweise umfasst die dritte Halterung 64 einen in den zweiten Teil 62 des Querförderers 30 stirnseitig hineinragenden Lagertopf 74, der koaxial zu dem zweiten Teil 62 des Querförderer 30 angeordnet ist.

Der Lagertopf 74 umschließt einen ortsfest an dem zweiten Teil 62 des Querförderers 30 angeordneten dritten Zapfen 75, wobei der dritte Zapfen 75 mittels eines Lagers 76 drehbar an dem Lagertopf 74 der dritten Halterung 64 angeordnet ist. Weiterhin umfasst die dritte Halterung 64 eine Tragplatte 77. Die Tragplatte 77 erstreckt sich ausgehend von dem Lagertopf 74 in Hochrichtung des Vorsatzgeräts 3 und ist höhenverstellbar an einem Rahmen 78 des Mittenabschnitts 24 angeordnet. Hierfür ist an dem Rahmen 78 des Mittenabschnitts 24 eine Konsole 79 angeordnet, die eine Mehrzahl von Verbindungsbereichen 80, insbesondere Langlöcher, umfasst, wobei den Verbindungsbereichen 80 jeweils Verbindungsmittel 81 zugeordnet sind, wobei die Tragplatte 77 mit den Verbindungsmitteln 81 höhenverstellbar an der Konsole 79 angeordnet ist.

### Bezugszeichenliste:

| | | | |
|---|---|---|---|
| 1 | Mähdrescher | 37 | Seitenwand |
| 2 | Maschinengehäuse | 38 | Flanschsegment |
| 3 | Vorsatzgerät | 39 | Verbindungsmittel |
| 4 | Erntegut | 40 | Flächiger Abschnitt |
| 5 | Schrägförderer | 41 | Verbindungsbereich |
| 6 | Dreschvorrichtung | 42 | Achse |
| 7 | Abscheideeinrichtung | 43 | Skala |
| 8 | Siebanordnung | 44 | Markierungen |
| 9 | Dreschtrommel | 45 | Hochstellung |
| 10 | Dreschkorb | 46 | Neutralstellung |
| 11 | Teilstrom | 47 | Tiefstellung |
| 12 | Teilstrom | 48 | Abgekanteter Abschnitt |
| 13 | Vorbereitungsboden | 49 | Konsole |
| 14 | Obersieb | 50 | Stellelement |
| 15 | Untersieb | 51 | Mutter |
| 16 | Reinigungsgebläse | 52 | Lagertopf |
| 17 | Zuführtrommel | 53 | Stirnflansch |
| 18 | Körnerstrom | 54 | Erster Zapfen |
| 19 | Rücklaufboden | 55 | Lager |
| 20 | Auffang- und Führungsboden | 56 | Überlastkupplung |
| 21 | Kornförderschnecke | 57 | Riemenscheibe |
| 22 | Elevator | 58 | Antriebsriemen |
| 23 | Korntank | 59 | Riemenführungsbolzen |
| 24 | Mittenabschnitt | 60 | Riemenführungselement |
| 25 | Seitenabschnitt | 61 | Erster Teil |
| 26 | Schwenkachse | 62 | Zweiter Teil |
| 27 | Pflückeinheiten | 63 | Zweite Halterung |
| 28 | Schneidtisch | 64 | Dritte Halterung |
| 29 | Auslassöffnung | 65 | Kupplung |
| 30 | Querfördere | 66 | Lagertopf |
| 31 | Rotationsachse | 67 | Zweiter Zapfen |
| 32 | Walzenkern | 68 | Lager |
| 33 | Schneckenwindungen | 69 | Tragplatte |
| 34 | Stirnseite | 70 | Querrahmen |
| 35 | Erste Halterung | 71 | Verbindungsbereichen |

| | |
|---|---|
| 72 | Verbindungsmittel |
| 73 | Konsole |
| 74 | Lagertopf |
| 75 | Dritter Zapfen |
| 76 | Lager |
| 77 | Tragplatte |
| 78 | Rahmen |
| 79 | Konsole |
| 80 | Verbindungsbereich |
| 81 | Verbindungsmittel |

## Patentansprüche

1. Selbstfahrender Mähdrescher (1) mit einem Vorsatzgerät (3), das mindestens einen Querförderer (30) aufweist, der an seinen Stirnseiten (34) von je einer höhenverstellbaren Halterung (35, 63, 64) aufgenommen ist,
wobei zumindest eine erste Halterung (35) an einer Seitenwand (37) des Vorsatzgeräts (3) angeordnet ist,
**dadurch gekennzeichnet, dass**
die erste Halterung (35) ein Flanschsegment (38) umfasst, dass mittels einer Mehrzahl von Verbindungsmitteln (39) an der Seitenwand (37) angeordnet ist.

2. Selbstfahrender Mähdrescher (1) nach Anspruch 1, **dadurch gekennzeichnet, dass** das Flanschsegment (38) einen an der Seitenwand (37) anliegenden flächigen Abschnitt (40) umfasst, der eine Mehrzahl von Verbindungsbereichen (41), insbesondere Langlöcher, umfasst, wobei den Verbindungsbereichen (41) die Verbindungsmittel (39) zugeordnet sind, wobei bei Vorliegen der Verbindungsmittel (39) in einem Losezustand die erste Halterung (35) entlang einer sich im Wesentlichen in vertikaler Richtung erstreckenden Achse (42) relativ zu der Seitenwand (37) beweglich ist.

3. Selbstfahrender Mähdrescher (1) nach Anspruch 2, **dadurch gekennzeichnet, dass** das Flanschsegment (38) eine Skala (43) zur Anzeige einer Position des Querförderers (30) umfasst, wobei vorzugsweise die Skala (43) jeweils eine Markierung (44) für eine Neutralstellung (46), eine Hochstellung (45) und einer Tiefstellung (47) des Querförderers (30) aufweist.

4. Selbstfahrender Mähdrescher (1) nach einem der Ansprüche 2 oder 3, **dadurch gekennzeichnet, dass** an den flächigen Abschnitt (40) ein abgekanteter Abschnitt (48) angeordnet ist und an der Seitenwand (37) eine Konsole (49) angeordnet ist, wobei der abgekantete Abschnitt (48) und die Konsole (49) mit einem Stellelement (50), insbesondere einem Bolzen, verbunden sind, wobei das Stellelement (50) sich entlang der im Wesentlichen in vertikale Richtung erstreckenden Achse (42) erstreckt und zum Verfahren des Flanschsegments (38) entlang der sich im Wesentlichen in vertikale Richtung erstreckenden Achse (42) vorgesehen und eingerichtet ist.

5. Selbstfahrender Mähdrescher (1) nach einem der Ansprüche 1 bis 4, **dadurch gekennzeichnet, dass** die erste Halterung (35) einen in den Querförderer (30) stirnseitig hineinragenden Lagertopf (52) umfasst, der koaxial zu einer Rotationsachse (31) des Querförderers (30) angeordnet ist und einen an dem Querförderer (30) ortsfest angeordneten ersten Zapfen (54) abschnittsweise umschließt, wobei der erste Zapfen (54) mittels eines Lagers (55) drehbar an dem Lagertopf (52) angeordnet ist.

6. Selbstfahrender Mähdrescher (1) nach Anspruch 5, **dadurch gekennzeichnet, dass** auf dem ersten Zapfen (54) eine Überlastkupplung (56) mit einer Riemenscheibe (57) angeordnet ist, wobei die Überlastkupplung (56) zur Übertragung einer Antriebskraft von der Riemenscheibe (57) auf den ersten Zapfen (54) vorgesehen und eingerichtet ist.

7. Selbstfahrender Mähdrescher (1) nach einem der Ansprüche 1 bis 6, **dadurch gekennzeichnet, dass** an der ersten Halterung (35) ein Riemenführungselement (60), vorzugsweise ein Riemenführungsbolzen (59), angeordnet ist, der mit einem Antriebsriemen (58) in Wirkverbindung steht.

8. Selbstfahrender Mähdrescher (1) nach einem der Ansprüche 1 bis 7, **dadurch gekennzeichnet, dass** das Vorsatzgerät (3) einen Mittenabschnitt (24) und zumindest einen Seitenabschnitte (25) umfasst, die jeweils um eine in Fahrtrichtung orientierte Schwenkachse (26) schwenkbeweglich verbunden sind, wobei der Querförderer (30) mehrteilig ausgebildet ist und ein erster Teil (61) des Querförderers (30) mit dem Seitenabschnitt (25) gegenüber einem in dem Mittenabschnitt (24) angeordneten zweiten Teil (62) des Querförderers (30) verschwenkbeweglich ist, wobei die einander zugewandten Enden des ersten und zweiten Teils (61, 62) des Querförderers (30) separat mittels einer höhenverstellbaren zweiten und dritten Halterung (63, 64) an dem Vorsatzgerät (3) angeordnet sind.

9. Selbstfahrender Mähdrescher (1) nach Anspruch 8, **dadurch gekennzeichnet, dass** der erste und zweite Teil (61, 62) des Querförderers (30) in einem ausgeklappten Zustand des Seitenabschnitts (25) stirnseitig mit einer Kupplung (65) in kraftübertragender Weise miteinander verbunden sind.

10. Selbstfahrender Mähdrescher (1) nach einem der Ansprüche 8 oder 9, **dadurch gekennzeichnet, dass** die zweite Halterung (63) einen in den ersten Teil (61) des Querförderers (30) stirnseitig hineinragenden Lagertopf (66) umfasst, der koaxial zu dem ersten Teil (61) des Querförderer (30) angeordnet ist und einen an dem ersten Teil (61) des Querförderers (30) ortsfest angeordneten zweiten Zapfen (67) abschnittsweise umschließt, wobei der zweite Zapfen (67) mittels eines Lagers (68) drehbar an dem Lagertopf (66) der zweiten Halterung (63) angeordnet ist.

11. Selbstfahrender Mähdrescher (1) nach einem der Ansprüche 8 bis 10, **dadurch gekennzeichnet, dass** die zweite Halterung (63) eine Tragplatte (69) umfasst, die höhenverstellbar an einem Querrahmen (70) des Seitenabschnitts (25) angeordnet ist, wobei vorzugsweise an dem Querrahmen (70) des Seitenabschnitts (25) eine Konsole (73) angeordnet ist, die eine Mehrzahl von Verbindungsbereichen (71), insbesondere Langlöcher, umfasst, wobei den Verbindungsbereichen (71) jeweils Verbindungsmittel (72) zugeordnet sind, wobei die Tragplatte (69) mit den Verbindungsmitteln (72) höhenverstellbar an der Konsole (73) angeordnet ist.

12. Selbstfahrender Mähdrescher (1) nach einem der Ansprüche 8 bis 11, **dadurch gekennzeichnet, dass** die dritte Halterung (64) einen in den zweiten Teil (62) des Querförderers (30) stirnseitig hineinragenden Lagertopf (74) umfasst, der koaxial zu dem zweiten Teil (62) des Querförderer (30) angeordnet ist und einen an dem zweiten Teil (62) des Querförderer (30) ortsfest angeordneten dritten Zapfen (75) abschnittsweise umschließt, wobei der dritte Zapfen (75) mittels eines Lagers (76) drehbar an dem Lagertopf (74) angeordnet ist.

13. Selbstfahrender Mähdrescher (1) nach einem der Ansprüche 8 bis 12, **dadurch gekennzeichnet, dass** die dritte Halterung (64) eine Tragplatte (77) umfasst, die höhenverstellbar an einem Rahmen (78) des Mittenabschnitts (24) angeordnet ist, wobei vorzugsweise an dem Rahmen (78) des Mittenabschnitts (24) eine Konsole (79) angeordnet ist, die eine Mehrzahl von Verbindungsbereichen (80), insbesondere Langlöcher, umfasst, wobei den Verbindungsbereichen (80) jeweils Verbindungsmittel (81) zugeordnet sind, wobei die Tragplatte (77) mit den Verbindungsmitteln (81) höhenverstellbar an der Konsole (79) angeordnet ist.
